Europäisches Patentamt

European Patent Office

Office européen des brevets

(11) Veröffentlichungsnummer: **0 307 631 B1**

(12) **EUROPÄISCHE PATENTSCHRIFT**

(45) Veröffentlichungstag der Patentschrift: **15.07.92**

(21) Anmeldenummer: **88113220.3**

(22) Anmeldetag: **16.08.88**

(51) Int. Cl.5: **H02G 3/06**, F16B 7/00

(54) **Kabelverschraubung.**

(30) Priorität: **12.09.87 DE 3730686**

(43) Veröffentlichungstag der Anmeldung:
**22.03.89 Patentblatt 89/12**

(45) Bekanntmachung des Hinweises auf die
Patenterteilung:
**15.07.92 Patentblatt 92/29**

(84) Benannte Vertragsstaaten:
**AT BE CH DE ES FR GB GR IT LI LU NL SE**

(56) Entgegenhaltungen:
**DE-A- 3 238 438**
**DE-A- 3 420 021**
**US-A- 3 801 131**

(73) Patentinhaber: **U.I. LAPP GMBH & CO. KG.**
**Schulze-Delitzsch-Strasse 25**
**W-7000 Stuttgart 80(DE)**

(72) Erfinder: **Studenski, Udo**
**Lichtenberger Weg 5**
**W-7730 Villingen - Schwenningen(DE)**

(74) Vertreter: **Griessbach, Dieter, Dr. et al**
**Höger, Stellrecht + Partner Uhlandstrasse**
**14 c**
**W-7000 Stuttgart 1(DE)**

**Beschreibung**

Die Erfindung betrifft eine Kabelverschraubung zur Halterung von Kabeln, Leitungen, Schläuchen oder dergleichen mit Schraubstutzen, Hutmutter und wenigstens einem Klemmteil, der durch Aufschrauben der Hutmutter auf den Schraubstutzen an den Mantel des zu halternden Kabels anpreßbar ist. (Siehe DE-A-3 420 021)

Bei bekannten Kabelverschraubungen dieser Art ist der Klemmteil in der Regel entweder als elastischer Dichtring oder als Klemmkäfig ausgebildet. Um das Kabel mit vorbestimmter Kraft in der Verschraubung zu halten, ist es erforderlich, den Klemmteil mit hoher Kraft gegen den Kabelmantel anzupressen. Diese Preßkraft ist im allgemeinen nur mit einem an die Hutmutter angesetzten Schraubschlüssel aufzubringen. Durch die hohe Preßkraft kann der Kabelmantel und auch die Isolierung der im Kabel enthaltenen Adern beschädigt und somit die Lebensdauer des Kabels herabgesetzt werden.

Es ist Aufgabe der Erfindung, eine gattungsgemäße Kabelverschraubung derart zu verbessern, daß auch bei kleinem Anpreßdruck des Klemmteils das Kabel mit vorbestimmter Kraft in die Kabelverschraubung gehalten ist.

Die Aufgabe wird erfindungsgemäß dadurch gelöst, daß an der Fläche des Klemmteils, die sich beim Aufschrauben der Hutmutter an den Mantel des Kabels anpreßt, kantige Körner aus hartem, elektrisch isolierendem Material, insbesondere aus Sand, fest angeordnet sind, die sich beim Anpressen in den Mantel des Kabels formschlüssig eingraben.

Im Gegensatz zu bisher wird somit das Kabel weniger durch Kraft- als vielmehr durch Formschluß festgehalten. Hierdurch läßt sich bei vorgegebener "Auszugskraft" des Kabels aus der Kabelverschraubung der vom Klemmteil ausgeübte Preßdruck erheblich reduzieren. Es genügt daher in den meisten Fällen, die Hutmutter lediglich manuell anzuziehen. Aufgrund der geringen Anpreßkraft des Klemmteils auf den Kabelmantel sind die Adern des Kabels in der Lage, einen Längenausgleich durchzuführen, was die Lebensdauer der Kabel, insbesondere bei häufig bewegten Kabeln erheblich erhöht.

Die nachstehende Beschreibung bevorzugter Ausführungsformen der Erfindung dient im Zusammenhang mit beiliegender Zeichnung der weiteren Erläuterung. Es zeigen:

Fig. 1 eine teilweise geschnittene Ansicht einer üblichen Kabelverschraubung mit Dicht- und Klemmring;

Fig. 2 und 3 Schnittansichten von Dicht- und Klemmringen;

Fig. 4 eine Explosionsdarstellung einer anderen Kabelverschraubung mit Klemmkäfig und

Fig. 5 eine Ansicht entlang der Linie 5-5 in Fig. 4.

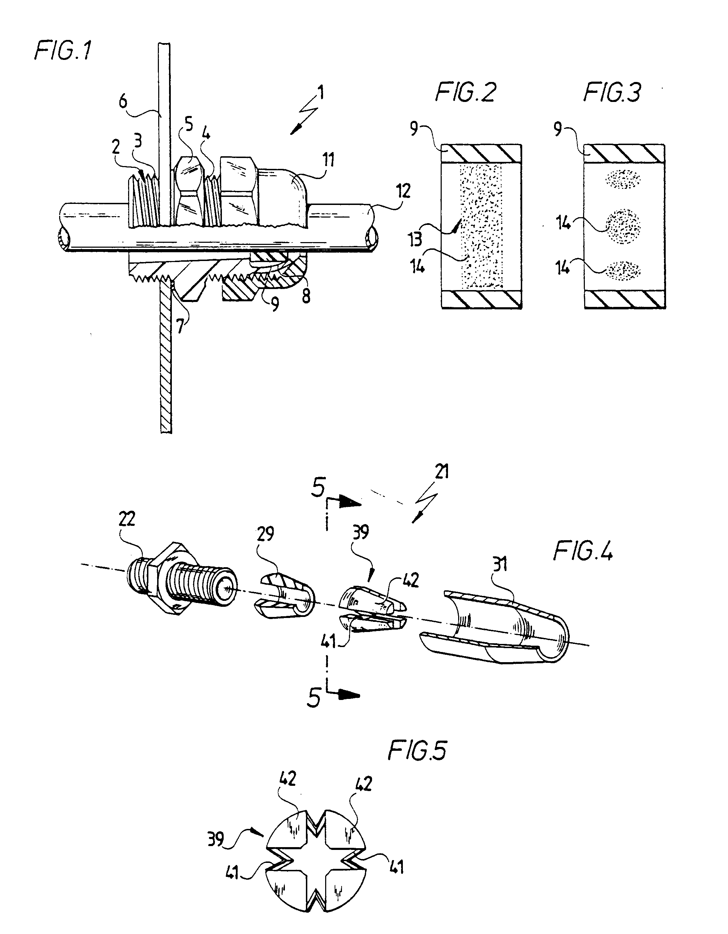

Die in Fig. 1 dargestellte Kabelverschraubung 1 umfaßt einen kreiszylindrischen Schraubstutzen 2 mit Außengewindeabschnitten 3, 4 und zwischen diesen Abschnitten liegendem Sechskant 5. Durch Ansetzen eines Schraubschlüssels oder dergleichen am Sechskant 5 kann der Schraubstutzen 2 in die Gewindeöffnung einer Wand 6 oder dergleichen eingeschraubt werden. Zwischen Sechskant 5 und Wand 6 können Dichtringe 7 angeordnet sein. Der Schraubstutzen 2, dessen Innenwand leicht konisch verlaufen kann, läuft an seinem der Wand 6 abgekehrten Ende in Klemmlamellen 8 aus, die axial und kammartig, d.h. mit Zwischenräumen zwischen sich, abstehen. Die Klemmlamellen 8 umschließen einen Klemm- und Dichtring 9 aus elastomerem Material, beispielsweise Gummi. Dieser Ring 9 kann in ungepreßtem Zustand die Form eines Kreis-Hohlzylinders haben. Auf den Außengewindeabschnitt 4 des Schraubstutzens 2 ist eine Hutmutter 11 aufgeschraubt, die eine konisch verlaufende Innenfläche besitzt.

Wenn die Hutmutter 11 entsprechend weit auf den Gewindeabschnitt 4 aufgeschraubt ist, legen sich die freien Enden der Klemmlamellen 8 an die konische Innenfläche der Hutmutter 11 an und werden von dieser radial nach einwärts gepreßt. Hierdurch wird der Klemm- und Dichtring 9 ebenfalls radial zusammengedrückt und gegen den Mantel eines die Kabelverschraubung 1 durchdringenden Kabels 12 angepreßt. Durch diese Anpressung wird einerseits der Kabelmantel in der Kabelverschraubung 1 abgedichtet, und gleichzeitig wird das Kabel in der Verschraubung 1 festgeklemmt. An die Stelle des Kabels 12 kann auch eine elektrische Leitung, ein Schlauch, Seil oder dergleichen treten.

Wie Fig. 2 zeigt, ist die Innenseite des hohlzylindrischen Klemm- und Dichtrings 9 in einem ringförmigen Teilbereich 13 mit harten, kantigen Körnern 14 aus elektrisch isolierendem Material, beispielsweise aus Sand (Siliziumdioxyd oder dergleichen) beschichtet. Beim Aufschrauben der Hutmutter 11 und dem verformenden Anpressen des Ringes 9 an den Mantel des Kabels 12 graben sich die kantigen Körner 14 in den Mantel (und gegebenenfalls in das elastomere Material des Ringes 9) ein und vermitteln hierdurch eine formschlüssige Halterung des Kabels in der Verschraubung.

Es ist günstig, lediglich den Teilbereich 13 auf der Innenseite des Ringes 9 mit Sand oder dergleichen zu versehen, weil dann zu beiden Seiten des Bereiches 13 sandfreie Ringbereiche freibleiben, die ihre Dichtwirkung am Kabel 12 ungehindert ausführen können.

Wie Fig. 3 zeigt, können anstelle eines ringförmigen Bereiches 13 auf der Innenseite des Ringes 9 auch mehrere, kleine, separate Flächenbereiche mit kantigen Körnern 14 beschichtet werden.

Bie einer anderen Ausführungsform einer Kabelverschraubung 21, die in Fig. 4 in Explosionsdarstellung gezeichnet ist, ist auf einen Schraubstutzen 22, der dem Schraubstutzen 2 in Fig. 1 entspricht, eine Hutmutter 31 aufschraubbar. Der Schraubstutzen 22 weist keine Klemmlamellen auf. Stattdessen ist in den konisch verlaufenden Teil der Hutmutter 31 ein sogenannter Klemmkäfig, beispielsweise aus Kunststoff, einsetzbar. Der Klemmkäfig 39 besteht aus vier durch federartige Teile 41 beweglich miteinander verbundenen Segmenten 42. Diese Segmente 42 werden beim Aufschrauben der Hutmutter 31 auf den Schraubstutzen 22 durch die konische Innenwand der Hutmutter 31 zusammengepreßt und klemmen ein die Kabelverschraubung 21 durchlaufendes Kabel fest. Diejenigen Flächenbereiche des Klemmkäfigs 39, die in Klemmkontakt mit dem Kabelmantel gelangen, werden wiederum mit kantigen Körnern aus hartem, elektrisch isolierendem Material, insbesondere aus Sand, beschichtet, die sich beim Anpressen in den Mantel des Kabels formschlüssig eingraben.

Bei der Ausführungsform nach Fig. 4 und 5 ist zwischen Schraubstutzen 22 und Klemmkäfig 39 ein Dichtring 29 aus Gummi oder dergleichen angeordnet, der sich einerseits an der Stirnfläche des Schraubstutzens 22 und andererseits an der Rückseite des Klemmkäfigs 39 abstützt und beim Aufschrauben der Hutmutter 31 durch Stauchung abdichtend an das Kabel anlegt.

Die kantigen Körner 14 können auf den als elastischen Ring 9 oder kompressiblen Klemmkäfig 39 ausgebildeten Klemmteil aufgeklebt werden, und zwar vorzugsweise lediglich bereichsweise, wie anhand von Fig. 2 und 3 beschrieben. Es ist auch möglich, die Körner, insbesondere Sandkörner vorher auf einem Trägermaterial, z.B. einem Klebstreifen oder dergleichen anzuordnen und das Trägermaterial auf dem Klemmteil (Ring 9 oder Klemmkäfig 39) zu befestigen. Bei einer anderen Ausführungsform können die kantigen Körner 14 auch direkt in den Werkstoff des Klemmteils eingebettet werden, beispielsweise durch Einmischen in die Grundmasse, aus welchen der Klemmteil geformte wird. Auch ein Einbrennen der Körner 14 in die Oberfläche des Klemmteils ist möglich.

Es wurde gefunden, daß die Auszugskraft des Kabels 12 aus der Kabelverschraubung 1 oder 21 bereits dann wesentlich erhöht wird, wenn sich die Körner 14 nur wenige hundertstel Millimeter tief in den Kabelmantel eingraben. Das Ausschrauben der Hutmutter 11, 31 braucht nur leicht von Hand zu erfolgen. Trotzdem erhält man aufgrund der kantigen Körner die gewünschten Auszugskräfte.

**Patentansprüche**

1. Kabelverschraubung (1, 21) zur Halterung von Kabeln, Leitungen, Schläuchen oder dergleichen mit Schraubstutzen (2, 22), Hutmutter (11, 31) und wenigstens einem Klemmteil (9, 39), der durch Aufschrauben der Hutmutter auf den Schraubstutzen an den Mantel des zu halternden Kabels (12) anpreßbar ist, **dadurch gekennzeichnet,** daß an der Fläche des Klemmteils (9, 39), die sich beim Aufschrauben der Hutmutter (11, 31) an den Mantel des Kabels (12) anpreßt, kantige Körner (14) aus hartem, elektrisch isolierendem Material, insbesondere aus Sand, fest angeordnet sind, die sich beim Anpressen in den Mantel des Kabels formschlüssig eingraben.

2. Kabelverschraubung nach Anspruch 1, dadurch gekennzeichnet, daß der Klemmteil ein Ring (9) aus elastomerem Material, insbesondere ein Dichtring ist.

3. Kabelverschraubung nach Anspruch 1, dadurch gekennzeichnet, daß der Klemmteil ein kompressibler Klemmkäfig (39) ist.

4. Kabelverschraubung nach Anspruch 1, 2 oder 3, dadurch gekennzeichnet, daß die kantigen Körner (14) lediglich bereichsweise an der klemmenden Fläche des Klemmteils (9, 39) angeordnet sind.

5. Kabelverschraubung nach einem der Ansprüche 1 bis 4, dadurch gekennzeichnet, daß die kantigen Körner (14) auf den Klemmteil (9, 39) aufgeklebt sind.

6. Kabelverschraubung nach einem der voranstehenden Ansprüche, dadurch gekennzeichnet, daß die kantigen Körner (14) auf einem Trägermaterial angeordnet sind und dieses auf dem Klemmteil (9, 39) befestigt ist.

7. Kabelverschraubung nach Anspruch 6, dadurch gekennzeichnet, daß das Trägermaterial ein Klebstreifen ist.

8. Kabelverschraubung nach einem der voranstehenden Ansprüche, dadurch gekennzeichnet, daß die kantigen Körner (14) in den Werkstoff des Klemmteils (9, 39) eingebettet sind.

**Claims**

1. A threaded cable connection (1, 21), for fixing cables, wires, tubes or the like, comprising a threaded connecting element (2, 22), a cap nut (11, 31) and at least one clamping element (9, 39) which can be pressed against the sheath of the cable (12) and held by screwing the cap nut on the threaded connecting element, characterized in that angular grains (14) of a hard, electrically insulating material, for example grains of sand, are provided on the surface of the clamping element (9, 39) which, when the cap nut (11, 31) is screwed on, presses on the sheath of the cable (12), which grains dig into the sheath of the cable in locking engagement when pressed against it.

2. A threaded cable connection according to claim 1, characterized in that the clamping element is a ring (9) of elastomeric material, for example a sealing ring.

3. A threaded cable connection according to claim 1, characterized in that the clamping element is a compressible clamping cone (39).

4. A threaded cable connection according to claim 1, 2 or 3, characterized in that the angular grains (14) are disposed only in localized regions on the clamping surface of the clamping element (9, 39).

5. A threaded cable connection according to any one of claims 1 to 4, characterized in that the angular grains (14) are fixed by adhesive to the clamping element (9, 39).

6. A threaded cable connection according to any one of the preceding claims, characterized in that the angular grains (14) are arranged on a carrier material and this is fixed to the clamping element (9, 39).

7. A threaded cable connection according to claim 6, characterized in that the carrier material is a self-adhesive strip.

8. A threaded cable connection according to any one of the preceding claims, characterized in that the angular grains (14) are embedded in the material of the clamping element (9, 39).

**Revendications**

1. Raccord fileté (1, 21) pour câble pour le maintien de câbles, de conduites, de tuyaux souples ou éléments analogues, avec un manchon fileté (2, 22), un écrou borgne (11, 31) et au moins un élément de serrage (9, 39) qui, par suite du vissage de l'écrou borgne sur le manchon, est serré contre la gaine du câble (12) à maintenir, caractérisé en ce que sur la surface de l'élément de serrage (9, 39) qui, lors du vissage de l'écrou borgne (11, 31), est serrée contre la gaine du câble, sont disposés de façon fixe des grains (14) anguleux en matière dure, isolante électriquement, en particulier des grains de sable, qui, au moment du serrage, s'incrustent par encastrement de formes dans la matière de la gaine du câble.

2. Raccord fileté pour câble selon la revendication 1, caractérisé en ce que l'élément de serrage est un anneau (9) en élastomère, en particulier un anneau d'étanchéité.

3. Raccord fileté pour câble selon la revendication 1, caractérisé en ce que l'élément de serrage est une douille compressible de serrage (39).

4. Raccord fileté pour câble selon la revendication 1, 2 ou 3, caractérisé en ce que les grains anguleux (14) sont disposés seulement par zones sur la surface serrante de l'élément de serrage (9, 39).

5. Raccord fileté pour câble selon une quelconque des revendications 1 à 4, caractérisé en ce que les grains anguleux (14) sont collés sur l'élément de serrage (9, 19).

6. Raccord fileté pour câble selon une quelconque des revendications précédentes, caractérisé en ce que les grains anguleux (14) sont disposés sur une matière porteuse et celle-ci est fixée sur l'élément de serrage (9, 39).

7. Raccord fileté pour câble selon la revendication 6, caractérisé en ce que la matière porteuse est un ruban adhésif.

8. Raccord fileté pour câble selon une quelconque des revendications précédentes, caractérisé en ce que les grains anguleux (14) sont incrustés dans la matière de l'élément de serrage (9, 39).

FIG.1

FIG.2

FIG.3

FIG.4

FIG.5